# FASCICULE DE BREVET EUROPEEN

(11) **EP 1 392 100 B1**
(45) Date de publication et mention de la délivrance du brevet: **22.08.2007**
(21) Numéro de dépôt: 02740858.2
(22) Date de dépôt: 04.06.2002
(51) Int. Cl.: A01D 43/10

(54) **ELEMENT DE CONDITIONNEMENT POUR MACHINES AGRICOLES**
KONDITIONIERUNGSELEMENT FÜR LANDWIRTSCHAFTLICHE MASCHINEN
PROCESSING ELEMENT FOR AGRICULTURAL MACHINES

(30) Priorité: 05.06.2001 FR 0107456; 18.04.2002 FR 0205100
(43) Date de publication de la demande: 03.03.2004
(73) Titulaire: KUHN S.A., 67700 Saverne (FR)
(72) Inventeur: LIGOUY, Jean-Baptiste, F-57405 Guntzviller (FR)
(86) Numéro de dépôt international: PCT/FR2002/001879
(87) Numéro de publication internationale: WO 2002/098201

(56) Documents cités:
- WO-A-91/03926
- DE-A- 2 638 917
- DE-U- 29 907 727
- FR-A- 2 296 996
- FR-A- 2 440 145
- FR-A- 2 717 037
- GB-A- 842 620
- GB-A- 1 256 554
- NL-A- 8 601 315
- US-A- 3 977 165
- US-A- 4 060 961

## Description

### Domaine Technique

La présente invention se rapporte aux dispositifs de traitement du fourrage utilisés dans le domaine du machinisme agricole.

Lors des travaux de fenaison, une bonne conservation du fourrage requiert un séchage complet de l'herbe coupé avant stockage. Les dispositifs de traitement du fourrage, encore appelés conditionneurs, permettent avantageusement de réduire le temps nécessaire à un tel séchage. En effet, ces derniers agissent mécaniquement pour fragmenter la pellicule de cire qui enveloppe les tiges du fourrage. Cette fragmentation favorise une dissipation rapide de l'humidité contenue dans la plante.

La présente invention concerne plus particulièrement un élément de conditionnement pour un tel dispositif de traitement du fourrage.

### Technique antérieure

Dans l'état de la technique, il est connu de réaliser un élément de conditionnement comportant :
- une partie active destinée à travailler le fourrage, et
- une partie de liaison destinée à lier, de manière pivotante autour d'un axe de liaison, ledit élément de conditionnement à un support.

Ainsi le document FR 2 440 145 décrit une faucheuse comportant un mécanisme de coupe destiné à couper un produit sur pied, par exemple de l'herbe. Pour ce faire, ledit mécanisme de coupe comporte quatre disques disposés suivant une ligne transversale de ladite faucheuse et entraînés en rotation autour d'un axe vertical respectif.

Cette faucheuse connue comporte également un dispositif de traitement destiné à diminuer le temps de séchage du fourrage coupé. A cet effet, ledit dispositif de traitement du fourrage comporte un rotor disposé derrière lesdits disques. Ce rotor est constitué d'éléments de conditionnement et d'un support entraîné en rotation autour d'un axe horizontal.

Chaque élément de conditionnement est lié, de manière pivotante, par l'une de ces extrémités audit support au moyen d'une articulation d'axe horizontal. Du fait de la force centrifuge engendrée par la rotation dudit support, l'élément de conditionnement s'étend, lors du travail, suivant une direction sensiblement radiale.

Ainsi lors du travail, le fourrage provenant du mécanisme de coupe est emmené, par une partie active de l'élément de conditionnement, le long d'une tôle de conditionnement pour finalement être éjecté vers l'arrière de ladite faucheuse. Le passage du fourrage contre ladite tôle de conditionnement provoque ladite fragmentation propice à un séchage rapide du produit coupé.

Le libre pivotement de l'élément de conditionnement par rapport audit support permet avantageusement audit élément de s'esquiver, vers l'arrière vu dans le sens de rotation dudit support, en cas de rencontre avec un obstacle.

Cet élément de conditionnement connu présente cependant des inconvénients.

En effet, l'entraînement du fourrage par la partie active engendre un effort résistant qui tend à écarter l'élément de conditionnement de sa position radiale. Plus précisément, l'élément de conditionnement est quelque peu incliné vers l'arrière par rapport au sens de rotation dudit support. Ce changement de position provoque une réduction du diamètre de travail du rotor et donc une diminution de son efficacité.

De plus, lorsque le fourrage est éjecté de ladite partie active, l'élément de conditionnement ne subit plus l'effort résistant. De ce fait, la force centrifuge provoque un retour brusque de l'élément de conditionnement vers la position radiale. Cependant entraîné par son inertie, ce dernier pivote au-delà de cette position radiale et bascule vers l'avant par rapport au sens de rotation du support. La force centrifuge, cherchant toujours à ramener l'élément de conditionnement en position radiale, provoque cette fois-ci un pivotement vers l'arrière de ce dernier. Le phénomène se répète donc dans le sens inverse.

Par conséquent entre deux contacts successifs de la partie active avec le fourrage, l'élément de conditionnement oscille d'avant en arrière autour de sa position radiale. Cette oscillation provoque une usure importante de l'articulation liant l'élément de conditionnement au support.

En outre, la fréquence de rotation d'un tel rotor est généralement comprise lors du travail entre 600 et 1000 tours par minute. De ce fait en cas de rupture de la liaison entre le support et l'élément de conditionnement, ce dernier est violemment éjecté du rotor par la force centrifuge. L'élément de conditionnement ainsi éjecté constitue un projectile se déplaçant à une vitesse relativement élevée. Ce projectile peut venir endommager d'autres éléments du dispositif de traitement du fourrage, notamment la tôle de conditionnement. D'une manière plus préoccupante encore, un tel projectile peut également être dangereux pour des personnes se trouvant à proximité du dispositif de traitement du fourrage.

### Exposé de l'invention

Le but de la présente invention est d'améliorer le fonctionnement et la durée de vie des rotors de conditionnement de l'art antérieur.

A cet effet, l'élément de conditionnement selon la présente invention est caractérisé par le fait qu'il comporte en sus une troisième partie disposée de telle sorte que :
- le centre de gravité de ladite partie active et le centre de gravité de ladite troisième partie sont situées de part et d'autre d'un plan passant par l'axe de liaison et sensiblement perpendiculaire à un axe longitudinal dudit élément de conditionnement, et
- le centre de gravité de ladite troisième partie est distant d'un plan passant par l'axe de liaison et contenant le centre de gravité de ladite partie active.

La présente invention concerne également un dispositif de traitement du fourrage comportant un rotor entraîné en rotation autour d'un axe horizontal, ledit rotor se compose :
- d'un support,
- d'au moins un élément de conditionnement muni d'une partie active destinée à travailler le fourrage, d'une première partie de liaison destinée à lier ledit élément de conditionnement audit support au moyen d'une première liaison, et d'une troisième partie telle que définie ci-dessus, et
- d'au moins un élément de liaison destiné à coopérer avec ladite première partie de liaison de manière à réaliser ladite première liaison entre ledit élément de conditionnement et ledit support.

Ledit dispositif de traitement du fourrage se caractérise par le fait que ledit élément de conditionnement comporte en sus une surface d'appui destinée à venir en contact contre une butée prévue sur ledit support ou sur ledit élément de liaison. Ce contact de ladite surface d'appui contre ladite butée permet avantageusement de définir une position sensiblement radiale de ladite partie active.

Selon une autre caractéristique de la présente invention, le dispositif de traitement du fourrage est caractérisé par le fait qu'il est prévu une deuxième liaison destinée à lier ledit élément de conditionnement audit support en cas de rupture de ladite première liaison.

En cas de défaillance de ladite première liaison, ladite deuxième liaison permet avantageusement de conserver un lien entre ledit élément de conditionnement et ledit support. Ainsi ledit élément de conditionnement ne sera pas éjecté du rotor. Les risques de blessure et d'endommagement sont donc supprimés.

### Description sommaire des dessins

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente, vue de dessus, une faucheuse agricole conforme à l'invention,
- la **figure 2** représente, vue de coté suivant la flèche II définie sur la figure 1 et à une autre échelle, la faucheuse agricole de la figure 1,
- la **figure 3** représente une vue en coupe, suivant la flèche III définie sur la figure 1 et à une autre échelle, d'un rotor conforme à la présente invention,
- la **figure 4** représente en perspective un élément de conditionnement conforme à l'invention,
- la **figure 5** représente, vu de coté suivant la flèche V définie sur la figure 4, l'élément de conditionnement de la figure 4,
- la **figure 6** représente, vu de coté suivant la flèche V définie sur la figure 4, un autre exemple d'un élément de conditionnement conforme à la présente invention,
- la **figure 7** représente, vu de coté suivant la flèche VII définie sur la figure 6, l'élément de conditionnement de la figure 6,
- la **figure 8** représente, vu de coté suivant la flèche VIII définie sur la figure 3 et à une autre échelle, une vue partielle d'un autre rotor conforme à la présente invention,
- la **figure 9** représente une vue en coupe, suivant la flèche III définie sur la figure 1 et à une autre échelle, du rotor de la figure 8 muni d'éléments de conditionnement de la figure 6.

### Manières de réaliser l'invention

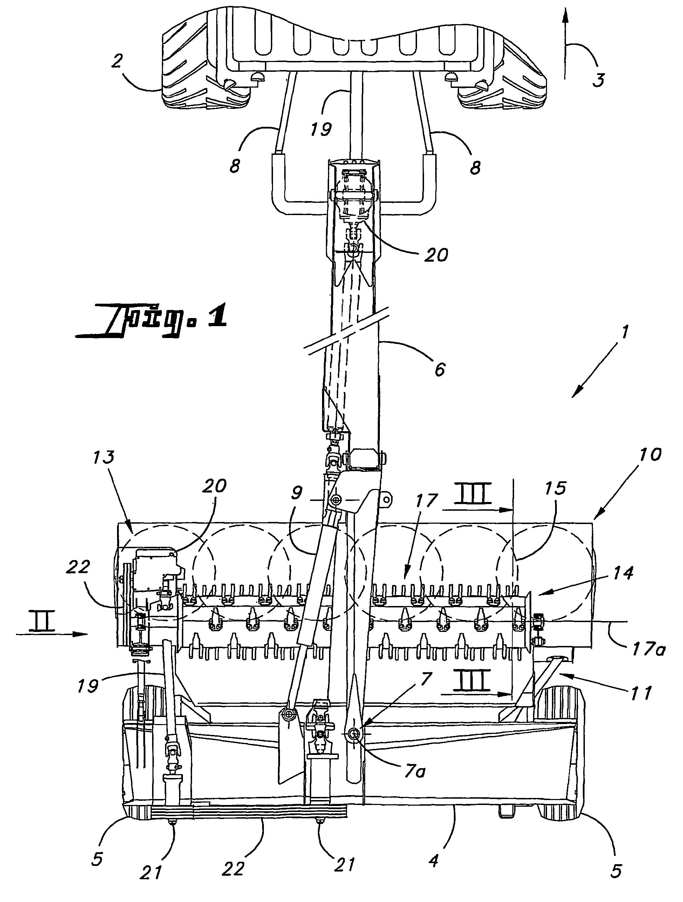

La figure 1 représente, en vue de dessus, une faucheuse agricole (1) conforme à la présente invention. Ladite faucheuse (1) est attelée à un véhicule moteur (2) qui la tire suivant une direction et un sens d'avance indiqué par la flèche (3). Dans la suite de la description, les notions suivantes "avant" et "arrière", "devant" et "derrière" sont définies par rapport au sens d'avance et les notions "droite" et "gauche" sont définies en regardant ladite faucheuse (1) de l'arrière dans le sens d'avance (3).

D'une manière connue de l'homme de l'art, ladite faucheuse (1) comporte un châssis (4) qui repose sur le sol (12) au moyen de deux roues (5). Ledit châssis (4) est lié à l'extrémité arrière d'un timon (6) au moyen d'une articulation centrale (7) d'axe (7a) sensiblement vertical. Pour sa part, l'extrémité avant dudit timon (6) est lié aux barres d'attelage inférieures (8) dudit véhicule moteur (2).

Dans l'exemple de réalisation représenté sur la figure 1, ladite faucheuse (1) est disposée sensiblement dans le prolongement dudit véhicule moteur (2). Cette configuration est utilisée lors du transport de ladite faucheuse (1). Lors du travail, ladite articulation centrale (7) permet, au moyen d'un vérin (9), de décaler ladite faucheuse (1) vers la droite ou vers la gauche dudit véhicule moteur (2). Ladite faucheuse (1) peut ainsi avantageusement travailler en va-et-vient.

D'une manière également connue de l'homme de l'art, ladite faucheuse (1) comporte en sus un groupe de fauche (10) lié audit châssis (4) au moyen d'une suspension (11). Ladite suspension (11) permet audit groupe de fauche (10) de suivre les dénivellations du sol (12) indépendamment dudit châssis (4). Avantageusement, ladite suspension (11) permet également de reporter au moins une partie du poids dudit groupe de fauche (10) sur ledit châssis (4). Ledit groupe de fauche (10) se compose d'un mécanisme de coupe (13) et d'un dispositif de traitement du fourrage (14).

Ledit mécanisme de coupe (13) est destiné à couper un produit sur pied, par exemple de l'herbe. Pour ce faire, ledit mécanisme de coupe (13) comporte plusieurs organes de coupe (15) entraînés en rotation autour d'un axe respectif sensiblement vertical. Lesdits organes de coupe (15), représentés symboliquement sur la figure 1, sont avantageusement disposés suivant une ligne transversale à ladite direction d'avance (3).

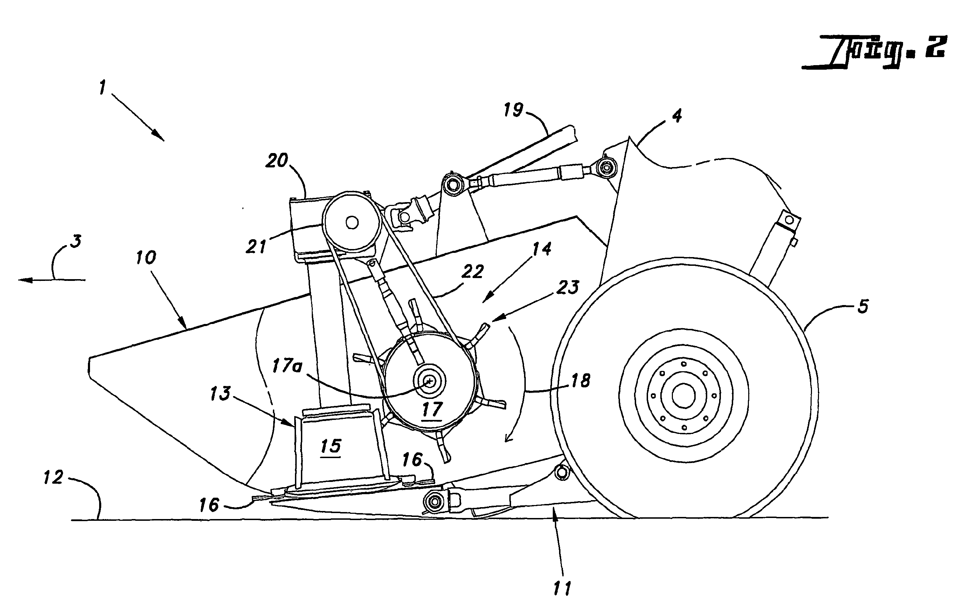

A la lumière de la figure 2, chaque organe de coupe (15) supporte deux éléments de coupe (16). Lors du travail lesdits éléments de coupe (16), encore appelés couteaux, décrivent des cercles dans un plan sensiblement horizontal. La vitesse de déplacement relativement importante desdits éléments de coupe (16), due essentiellement à la rotation desdits organes de coupe (15), permet de couper le produit sur pied.

Pour sa part, ledit dispositif de traitement du fourrage (14) est destiné à accélérer le séchage du produit coupé par ledit mécanisme de coupe (13). Pour ce faire, ledit dispositif de traitement du fourrage (14) comporte un rotor (17) entraîné en rotation autour d'un axe (17a) sensiblement horizontal et transversal à ladite direction d'avance (3).

Lors du travail, ledit rotor (17) emmène le fourrage provenant dudit mécanisme de coupe (13) le long d'une tôle de conditionnement. Le passage du fourrage contre ladite tôle de conditionnement provoque une fragmentation propice à un séchage rapide du produit coupé. Ladite tôle de conditionnement étant à la portée de l'homme de l'art, elle n'a donc pas été représentée sur les figures.

D'une manière connue de l'homme de fart, ladite faucheuse (1) comporte également des éléments de transmission destinés à transmettre un mouvement de rotation d'une prise de force dudit véhicule moteur (2) jusqu'auxdits éléments de coupe (16) et audit rotor (17). Ces éléments de transmission sont notamment des arbres télescopiques à joints universels (19), des carters de renvoi (20), des poulies (21) et des courroies (22).

Certains éléments de ladite faucheuse (1) n'ont été représentés que partiellement sur les figures 1 et 2 afin de faciliter la compréhension de la présente invention.

Afin d'emmener efficacement le fourrage, ledit rotor (17) comporte des éléments de conditionnement (23) liés à un support (24) au moyen d'éléments de liaison (25).

En effet, chaque élément de conditionnement (23) est pourvu d'une partie active (26) s'étendant lors du travail suivant une direction au moins sensiblement radiale. Lesdites parties actives (26) agissent ainsi à la manière de griffes pour entraîner le fourrage le long de ladite tôle de conditionnement.

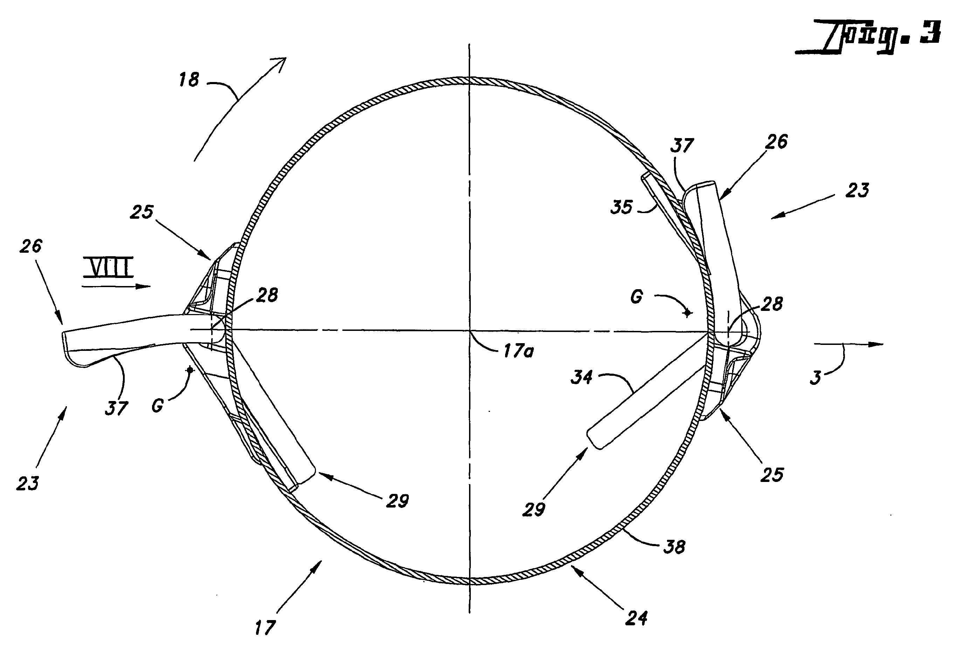

A la lumière de la figure 3 et d'une manière particulièrement avantageuse, chaque élément de conditionnement (23) est lié audit support (24) de façon à pouvoir s'esquiver en cas de rencontre avec un obstacle.

A cet effet, chaque élément de conditionnement (23) comporte également une première partie de liaison (27) destinée à lier ledit élément de conditionnement (23) audit support (24) au moyen d'une première liaison. Ladite première partie de liaison (27) coopère avantageusement avec un élément de liaison respectif (25) afin de réaliser un axe de liaison (28) de type pivot. La réalisation de cette première liaison sera décrite ultérieurement plus en détails.

De manière préférentielle, les axes de liaison (28) sont au moins sensiblement parallèles à l'axe de rotation (17a) dudit rotor (17). Ainsi en cas de rencontre avec un obstacle, ladite partie active (26) desdits éléments de conditionnement (23) peut pivoter vers l'arrière par rapport au sens de rotation (18) dudit rotor (17).

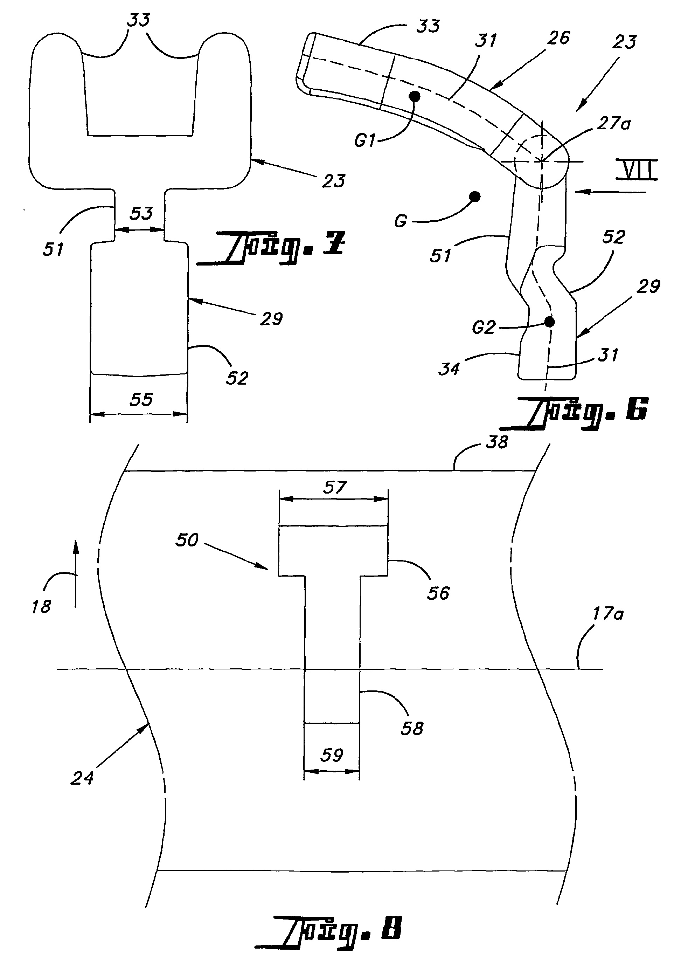

Selon une caractéristique importante de la présente invention et plus précisément à la lumière de la figure 5, chaque élément de conditionnement (23) comporte en sus une troisième partie (29) disposée de telle sorte que :
- le centre de gravité (G1) de ladite partie active (26) et le centre de gravité (G2) de ladite troisième partie (29) sont situés de part et d'autre d'un plan (30) passant par l'axe de liaison (28) et sensiblement perpendiculaire à un axe longitudinal (31) dudit élément de conditionnement (23), et
- le centre de gravité (G2) de ladite troisième partie (29) est distant d'un plan (32) passant par l'axe de liaison (28) et contenant le centre de gravité (G1) de ladite partie active (26).

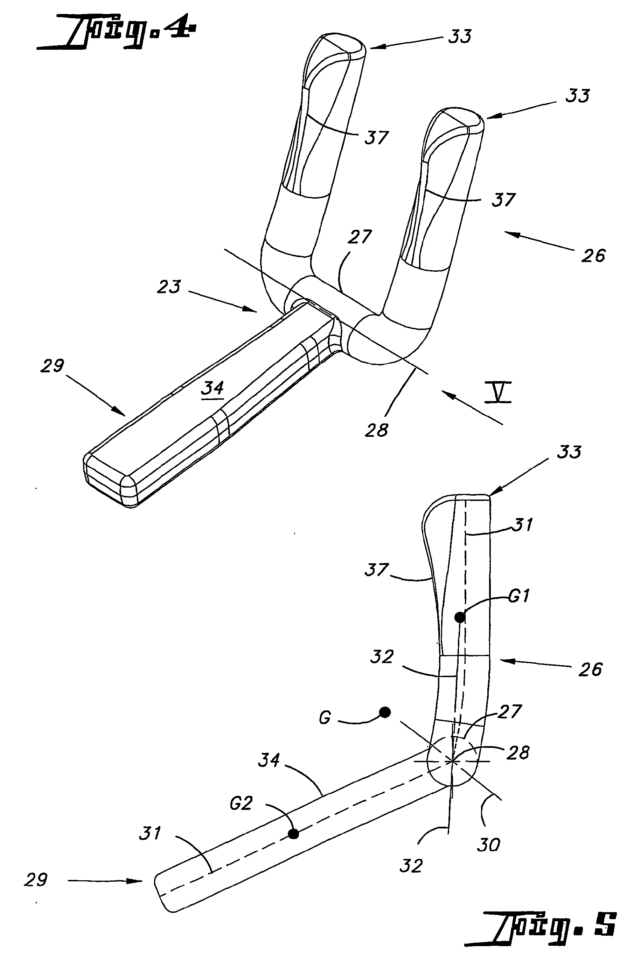

Dans l'exemple de réalisation représenté sur les figures 4 et 5, ladite partie active (26) desdits éléments de conditionnement (23) comporte deux doigts (33) sensiblement identiques. Lesdits doigts (33) sont décalés l'un par rapport à l'autre suivant une direction sensiblement parallèle audit axe de liaison (28) tout en restant sensiblement parallèles entre eux. De plus, lesdits doigts (33) sont sensiblement perpendiculaires audit axe de liaison (28). Lesdits doigts (33) sont également légèrement courbés afin de pouvoir libérer facilement le fourrage après le passage de ladite tôle de conditionnement.

D'une manière avantageuse, ladite première partie de liaison (27) a une forme cylindrique dont l'axe longitudinal (27a) est sensiblement confondu avec ledit axe de liaison (28). Chaque extrémité de ladite forme cylindrique se prolonge jusqu'à un doigt respectif (33). Ladite partie active (26) et ladite première partie de liaison (27) forment ainsi sensiblement un "U".

Pour sa part, ladite troisième partie (29) a une forme sensiblement parallélépipédique dont une des extrémités se prolonge avantageusement jusqu'à ladite première partie de liaison (27).

Afin de simplifier la compréhension de la présente invention, la vue en coupe dudit rotor (17) représentée sur la figure 3 ne comporte que deux éléments de conditionnement (23) liés audit support (24) au moyen d'un élément de liaison respectif (25).

L'élément de conditionnement (23) situé à gauche de la figure 3 est représenté en positon de travail normal. Sa partie active (26) est donc disposée sensiblement radialement.

Par contre l'élément de conditionnement (23) situé à droite de la figure 3 est représenté en position esquivée. Sa partie active (26) est donc pivotée, autour de son axe de liaison (28), vers l'arrière par rapport au sens de rotation (18) dudit rotor (17).

Selon une autre caractéristique importante de la présente invention, l'élément de conditionnement (23) comporte une surface d'appui (34) destinée à venir en contact contre une butée (35) lors de son pivotement autour dudit axe de liaison (28). Le contact de ladite surface d'appui (34) contre ladite butée (35) se produit avantageusement lorsque ladite partie active (26) est en position sensiblement radiale.

Lors du travail, la force centrifuge due à la rotation dudit rotor (17) a tendance à faire pivoter ledit élément de conditionnement (23) autour dudit axe de liaison (28) de manière à ce que le centre de gravite (G) dudit élément de conditionnement (23), ledit axe de liaison (28) et ledit axe de rotation (17a) soient alignés.

Lors de ce pivotement, le contact de ladite surface d'appui (34) contre ladite butée (35) se produit, d'une manière particulièrement avantageuse, avant que ledit centre de gravite (G), ledit axe de liaison (28) et ledit axe de rotation (17a) ne soient alignés. De ce fait lorsque ladite surface d'appui (34) est en contact contre ladite butée (35), la force centrifuge exerce toujours sur ledit élément de conditionnement (23) un couple de maintien qui tend à conserver ladite partie active (26) en position sensiblement radiale. Par conséquent, ledit élément de conditionnement (23) ne s'écartera de sa position normale de travail que si le couple résistant exercé par le produit coupé sur ladite partie active (26) est supérieur au couple de maintien du à la force centrifuge.

De manière préférentielle, la géométrie dudit élément de conditionnement (23) est déterminée de façon à ce que le couple de maintien soit supérieur au couple résistant rencontré dans toute la plage d'utilisation normale dudit dispositif de traitement du fourrage (14). Donc même avec un important flux de fourrage à traiter, lesdites parties actives (26) restent en position sensiblement radiale. Ledit rotor (17) conserve ainsi son diamètre de travail nominal et sa pleine efficacité.

Ce maintien en position permet également d'éviter le phénomène d'oscillation autour de la position radiale dont souffrent les éléments de conditionnement de l'art antérieur. L'articulation entre ladite première partie de liaison (27) et ledit élément de liaison (25) étant moins sollicitée, la durée de vie dudit rotor (17) est ainsi grandement augmentée.

De manière préférentielle encore, la géométrie dudit élément de conditionnement (23) est déterminée de façon à ce que le couple exercé par la force centrifuge tend à diminuer lorsque ladite partie active (26) s'écarte de la position radiale. Ainsi, ledit élément de conditionnement (23) s'esquive plus facilement en cas de rencontre avec un obstacle.

A la lumière de l'élément de conditionnement (23) représenté à droite sur la figure 3, en position complètement esquivée ladite partie active (26) occupe avantageusement une position sensiblement tangentielle. De ce fait, des obstacles relativement volumineux peuvent traverser ledit dispositif de traitement du fourrage (14) sans provoquer de dégât.

De manière préférentielle, en position complètement esquivée ladite partie active (26) vient en appui contre ledit support (24). A cet effet, la face arrière (37) de ladite partie active (26) est pourvue d'une forme sensiblement complémentaire à la forme extérieure dudit support (24).

D'une manière également préférentielle, en position complètement esquivée le couple exercé par ladite force centrifuge sur ledit élément de conditionnement (23) reste positif et non nul. Ainsi après le passage dudit obstacle, ladite partie active (26) retrouve automatiquement la position de travail normale, à savoir sensiblement radiale.

A la lumière de la figure 3, ledit support (24) est réalisé au moyen d'un tube cylindrique (38) d'axe longitudinal sensiblement confondu avec ledit axe de rotation (17a). D'une manière avantageuse, la périphérie dudit tube (38) s'étend jusqu'au proche voisinage desdites premières parties de liaison (27). On obtient ainsi un support de diamètre maximal permettant de diminuer les risques d'enroulement du produit coupé autour dudit rotor (17).

De manière avantageuse, une face de ladite troisième partie (29) constitue ladite surface d'appui (34) de l'élément de conditionnement correspondant (23). Pour sa part, ladite butée (35) est réalisée au moyen d'une face dudit élément de liaison (25).

De manière également avantageuse, ladite surface d'appui (34) et ladite butée (35) sont situées à l'intérieur dudit tube (38). De ce fait, ladite surface d'appui (34) et ladite butée (35) sont protégées de l'usure due au frottement du produit coupé.

D'une manière préférentielle, la surface dudit tube (38) comporte des encoches (50) dans lesquelles s'engagent lesdits éléments de liaison (25). Chaque élément de liaison (25) est avantageusement maintenu de manière amovible dans ladite encoche correspondante, par exemple au moyen de deux vis. Un éventuel remplacement d'un élément de conditionnement (23) et/ou d'un élément de liaison (25) peut ainsi être rapidement effectué.

Dans l'exemple de réalisation représenté sur les figures 1 et 2, lesdits éléments de conditionnement (23) sont répartis sur toute la surface dudit tube (38). Plus précisément à la lumière de la figure 2, lesdits éléments de conditionnement (23) sont disposés de manière homogène sur la périphérie dudit tube (38) avec un angle de décalage d'environ 60 degrés. A la lumière de la figure 1, lesdits éléments de conditionnement (23) sont également répartis sur toute la longueur dudit tube (38). D'une manière avantageuse, le décalage longitudinal entre deux éléments de conditionnement consécutifs (23) correspond sensiblement au diamètre de l'un desdits doigts (33). Ainsi lors de la rotation dudit rotor (17), toute la longueur de ladite tôle de recouvrement est balayée par lesdits doigts (23).

Dans l'exemple de réalisation représenté sur la figure 3, la totalité de ladite troisième partie (29) est protégée de l'usure occasionnée par le frottement du produit coupé soit par ledit tube (38), soit par ledit élément de liaison (25). La matière constituant ladite troisième partie (29) pourra donc avantageusement être différente de la matière constituant ladite partie active (26).

Tel que décrit précédemment, ladite première partie de liaison (27) dudit élément de conditionnement (23) coopère avec ledit élément de liaison respectif (25) afin de réaliser ladite première liaison. Pour ce faire, ledit élément de liaison (25) est muni d'une emprunte de forme complémentaire à la forme cylindrique de ladite première partie de liaison (27). Lors de l'assemblage de cet exemple de réalisation dudit rotor (17), la forme cylindrique de ladite première partie de liaison (27) vient se prendre dans l'emprunte dudit élément de liaison (25) de manière à réaliser ledit axe de liaison (28) de type pivot.

Suivant une autre caractéristique importante de la présente invention, il est prévu une deuxième liaison destinée à lier ledit élément de conditionnement (23) audit support (24) en cas de rupture de ladite première liaison.

Dans l'exemple de réalisation représenté sur les figures 6 à 9, en cas de rupture de ladite première liaison, ladite deuxième liaison s'effectue plus précisément entre ledit élément de conditionnement (23) et ledit tube (38). D'une manière préférentielle, ladite deuxième liaison s'effectue entre une deuxième partie de liaison dudit élément de conditionnement (23) et ledit tube (38). D'une manière particulièrement avantageuse, ladite deuxième liaison s'effectue entre ladite troisième partie (29) et ledit tube (38).

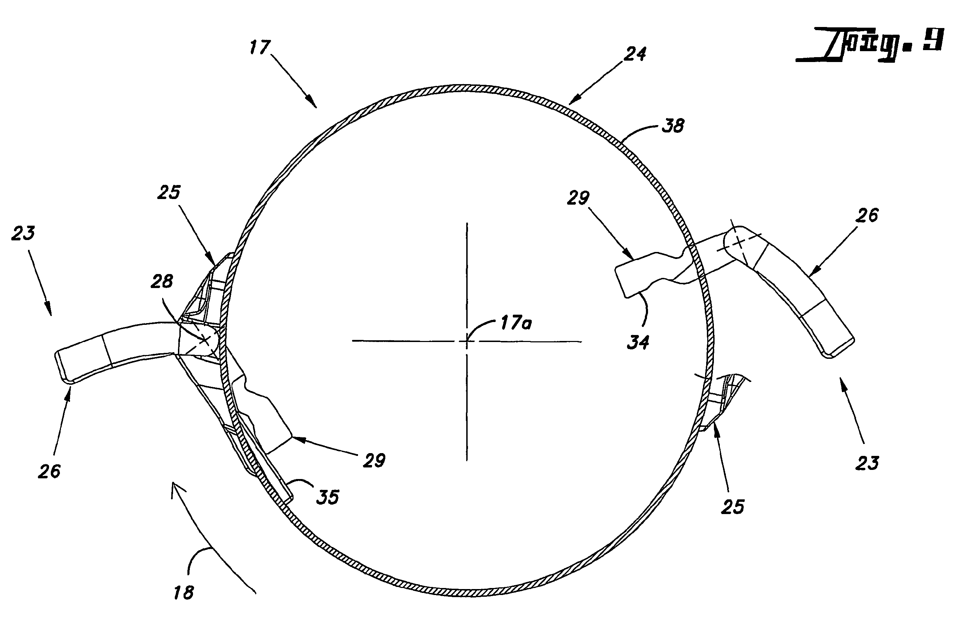

Pour ce faire et à la lumière des figures 6 et 7, ladite deuxième partie de liaison (29) comporte en sus un corps (51) et une tête (52). Ledit corps (51) est lié à ladite première partie de liaison (27) et ladite tête (52) est avantageusement distante dudit axe (27a) de ladite première partie de liaison (27). De plus, la largeur (55) de ladite tête (52), vue suivant ledit axe (27a), est supérieure à la largeur (53) dudit corps (51). De préférence, ladite troisième partie (29) s'étend de manière au moins sensiblement perpendiculaire à ladite première partie de liaison (27).

Comme décrit précédemment, ladite troisième partie (29) s'étend au moins partiellement à l'intérieur dudit tube (38). Pour ce faire et à la lumière de la figure 8, ladite encoche (50) se compose d'une zone d'entrée (56) dont la largeur (57) vue suivant ledit axe de rotation (17a) est supérieure ou égale à ladite largeur (55) de ladite tête (52). Ladite zone d'entrée (56) permet l'introduction au moins partielle de ladite troisième partie (29) dans ledit tube (38). Ladite encoche (50) comporte également une zone de maintien (58) dont la largeur (59), vue suivant ledit axe de rotation (17a) est inférieure à ladite largeur (55) de ladite tête (52) mais supérieure ou égale à ladite largeur (53) dudit corps (51). Ladite zone de maintien (58) dudit tube (38) est destinée à coopérer avec ladite troisième partie (29) dudit élément de conditionnement (23) de manière à réaliser ladite deuxième liaison. Ladite encoche (50) s'étend de préférence suivant un plan au moins sensiblement perpendiculaire audit axe de rotation (17a). De plus vue suivant le sens de rotation (18) dudit support (24), ladite zone d'entrée (56) est avantageusement disposée en avant de ladite zone de maintien (58).

Afin de simplifier la compréhension de la présente invention, la vue en coupe dudit rotor (17) représentée sur la figure 9 ne comporte que deux éléments de conditionnement (23) liés audit tube (38) au moyen d'un élément de liaison respectif (25).

L'élément de conditionnement (23) situé à gauche de la figure 9 est représenté en positon de travail normal. Ledit élément de conditionnement (23) est donc lié audit support (24) au moyen de ladite première liaison. Ladite tête (52) de ladite troisième partie (29) n'est pas en contact avec ledit tube (38). Ladite deuxième liaison n'est donc pas effective.

Par contre l'élément de conditionnement (23) situé à droite de la figure 9 est représenté après rupture de ladite première liaison. Ladite tête (52) vient en contact avec la surface intérieure dudit tube (38). La largeur (59) de ladite zone de maintien (58) étant inférieure à la largeur (55) de ladite tête (52), ledit élément de conditionnement (23) ne sera donc pas éjecté dudit support (24). Tout déplacement excessif, suivant les autres directions que la direction radiale, dudit élément de conditionnement (23) par rapport audit support (24) est supprimé par le contact dudit corps (51) sur les bords de ladite zone de maintien (58). Ledit élément de conditionnement (23) situé à droite est donc lié audit support (24) au moyen de ladite deuxième liaison.

Une des causes possibles de la rupture de ladite première liaison étant la casse dudit élément de liaison (25), l'élément de liaison (25) situé à droite de la figure 9 n'est représenté que partiellement de manière à symboliser cette rupture.

La faucheuse (1), le dispositif de traitement du fourrage (14) et l'élément de conditionnement (23) qui viennent d'être décrits, ne sont qu'un exemple qui ne saurait en aucun cas limiter le domaine de protection défini par les revendications suivantes.

La faucheuse (1) représentée sur la figure 1 est du type portée. Il va de soi que la présente invention s'applique également aux faucheuses de type traînées ou automotrices.

La présente invention concerne également les faucheuses agricoles (1) ayant un mécanisme de coupe (13) de conception différente.

## Revendications

1. Elément de conditionnement pour un dispositif de traitement du fourrage comportant :
- une partie active (26) destinée à travailler le fourrage, et
- une première partie de liaison (27) destinée à lier, de manière pivotante autour d'un axe de liaison (28), ledit élément de conditionnement (23) à un support (24),
***caractérisé par le fait que*** ledit élément de conditionnement (23) comporte en sus une troisième partie (29) disposée de telle sorte que :
- le centre de gravité (G1) de ladite partie active (26) et le centre de gravité (G2) de ladite troisième partie (29) sont situés de part et d'autre d'un plan (30) passant par l'axe de liaison (28) et sensiblement perpendiculaire à un axe longitudinal (31) dudit élément de conditionnement (23), et
- le centre de gravité (G2) de ladite troisième partie (29) est distant d'un plan (32) passant par l'axe de liaison (28) et contenant le centre de gravité (G1) de ladite partie active (26).

2. Elément de conditionnement selon la revendication 1, ***caractérisé par le fait que*** ladite partie active (26) comporte deux doigts (33) décalés l'un part rapport à l'autre suivant une direction sensiblement parallèle audit axe de liaison (28).

3. Elément de conditionnement selon la revendication 2, ***caractérisé par le fait que*** lesdits doigts (33) sont sensiblement parallèles entre eux et sensiblement perpendiculaires audit axe de liaison (28).

4. Elément de conditionnement selon la revendication 2 ou 3, ***caractérisé par le fait que*** lesdits doigts (33) sont sensiblement courbés.

5. Elément de conditionnement selon l'une quelconque des revendications 1 à 4, ***caractérisé par le fait que*** ladite partie de liaison (27) a au moins sensiblement la forme d'un cylindre.

6. Elément de conditionnement selon la revendication 5, ***caractérisé par le fait que*** l'axe longitudinal (27a) dudit cylindre est sensiblement confondu avec ledit axe de liaison (28).

7. Elément de conditionnement selon la revendication 5 ou 6 prise en combinaison avec l'une des revendications 2 à 4, ***caractérisé par le fait que*** chaque extrémité dudit cylindre se prolonge jusqu'à un doigt respectif (33) de sorte que ladite partie active (26) et ladite partie de liaison (27) forment sensiblement un "U".

8. Elément de conditionnement selon l'une quelconque des revendications 1 à 7, ***caractérisé par le fait qu*'**une extrémité de ladite troisième partie (29) se prolonge jusqu'à ladite partie de liaison (27).

9. Elément de conditionnement selon l'une quelconque des revendications 1 à 8, ***caractérisé par le fait que*** la matière constituant ladite partie active (26) est différente de la matière constituant ladite troisième partie (29).

10. Dispositif de traitement du fourrage comportant un rotor (17) entraîné en rotation autour d'un axe horizontal (17a), ledit rotor (17) se compose d'au moins un élément de conditionnement (23) selon l'une quelconque des revendications 1 à 9 lié, de manière pivotante autour d'un axe de liaison (28) définissant une première liaison, à un support (24) au moyen d'un élément de liaison (25), ***caractérisé par le fait que*** ledit élément de conditionnement (23) comporte une surface d'appui (34) destinée à venir en contact contre une butée (35) prévue sur ledit support (24) ou sur ledit élément de liaison (25).

11. Dispositif de traitement du fourrage selon la revendication 10, ***caractérisé par le fait que*** lors du contact de ladite surface d'appui (34) contre ladite butée (35), ladite partie active (26) de l'élément de conditionnement correspondant (23) est orientée sensiblement radialement.

12. Dispositif de traitement du fourrage selon la revendication 10 ou 11, ***caractérisé par le fait que*** lors du contact de ladite surface d'appui (34) contre ladite butée (35), le centre de gravité (G) dudit élément de conditionnement correspondant (23) est distant d'une droite passant par ledit axe de liaison (28) et ledit axe de rotation (17a).

13. Dispositif de traitement du fourrage selon l'une quelconque des revendications 10 à 12, ***caractérisé par le fait qu***'une face arrière (37) de la partie active (26) dudit élément de conditionnement (23) a une forme sensiblement complémentaire à la forme extérieure dudit support (24).

14. Dispositif de traitement du fourrage selon l'une quelconque des revendications 10 à 13, ***caractérisé par le fait que** :*
- ledit support (24) est réalisé au moyen d'un tube (38), et
- ladite surface d'appui (34) et ladite butée (35) sont disposées à l'intérieur dudit tube (38), ladite butée (35) étant réalisée par une face dudit élément de liaison (25).

15. Dispositif de traitement du fourrage selon l'une quelconque des revendications 10 à 14, ***caractérisé par le fait qu'**il* est prévu une deuxième liaison destinée à lier ledit élément de conditionnement (23) audit support (24) en cas de rupture de ladite première liaison.

16. Dispositif de traitement du fourrage selon la revendication 15, ***caractérisé par le fait que*** ledit élément de conditionnement (23) comporte une deuxième partie de liaison destinée à lier ledit élément de conditionnement (23) audit support (24) au moyen de ladite deuxième liaison en cas de rupture de ladite première liaison.

17. Dispositif de traitement du fourrage selon la revendication 16, ***caractérisé par le fait que*** ladite troisième partie (29) constitue ladite deuxième partie de liaison destinée à lier ledit élément de conditionnement (23) audit support (24) au moyen de ladite deuxième liaison en cas de rupture de ladite première liaison.

18. Dispositif de traitement du fourrage selon la revendication 17, ***caractérisé par le fait que*** ladite troisième partie (29) comporte un corps (51) et une tête (52), la largeur (55) de ladite tête (52) étant supérieure à la largeur (53) dudit corps (51).

19. Dispositif de traitement du fourrage selon la revendication 18, ***caractérisé par le fait que*** ledit corps (51) est lié à ladite première partie de liaison (27).

20. Dispositif de traitement du fourrage selon l'une quelconque des revendications 10 à 19, ***caractérisé par le fait que*** la surface dudit support (24) comporte au moins une encoche (50) permettant l'introduction au moins partielle de ladite troisième partie (29) dans ledit support (34).

21. Dispositif de traitement du fourrage selon la revendication 20 prise en combinaison avec la revendication 18 ou 19, ***caractérisé par le fait que*** ladite encoche (50) comporte une zone d'entrée (56) dont la largeur (57) est supérieure ou égale à ladite largeur (55) de ladite tête (52).

22. Dispositif de traitement du fourrage selon la revendication 20 ou 21 prise en combinaison avec la revendication 18 ou 19, ***caractérisé par le fait que*** ladite encoche (50) comporte une zone de maintien (58) dont la largeur (59) est inférieure à ladite largeur (55) de ladite tête (52) mais supérieure ou égale à ladite largeur (53) dudit corps (51).

23. Dispositif de traitement du fourrage selon les revendications 21 et 22, ***caractérisé par le fait que**,* vue suivant un sens de rotation (18) dudit rotor (17), ladite zone d'entrée (56) est disposée en avant de ladite zone de maintien (58).

24. Dispositif de traitement du fourrage selon l'une quelconque des revendications 20 à 23, ***caractérisé par le fait que*** ladite encoche (50) s'étend suivant un plan au moins sensiblement perpendiculaire audit axe de rotation (17a) dudit rotor (17).

25. Dispositif de traitement du fourrage selon l'une quelconque des revendications 10 à 24, ***caractérisé par le fait que*** ledit élément de liaison (25) est lié de manière amovible audit support (24).

26. Faucheuse agricole, ***caractérisée par le fait qu'***elle comporte un dispositif de traitement du fourrage (14) selon l'une quelconque des revendications 10 à 25.

## Claims

1. Conditioning element for a forage treatment device comprising:
- an active part (26) intended to work the forage, and
- a first connecting part (27) intended to connect, in a pivoting manner about a connecting axis (28), the said conditioning element (23) to a support (24),
***characterized in* that** the said conditioning element (23) additionally comprises a third part (29) arranged in such a way that:
- the center of gravity (G1) of the said active part (26) and the center of gravity (G2) of the said third part (29) are located one on each side of a plane (30) passing through the connecting axis (28) and substantially perpendicular to a longitudinal axis (31) of the said conditioning element (23), and
- the center of gravity (G2) of the said third part (29) is distant from a plane (32) passing through the connecting axis (28) and containing the center of gravity (G1) of the said active part (26).

2. Conditioning element according to claim 1, ***characterized in* that** the said active part (26) has two fingers (33) offset one with respect to the other in a direction substantially parallel to the said connecting axis (28).

3. Conditioning element according to claim 2, ***characterized in* that** the said fingers (33) are substantially mutually parallel and substantially perpendicular to the said connecting axis (28).

4. Conditioning element according to claim 2 or 3, ***characterized in* that** the said fingers (33) are substantially curved.

5. Conditioning element according to any one of claims 1 to 4, ***characterized in* that** the said connecting part (27) at least substantially has the shape of a cylinder.

6. Conditioning element according to claim 5, ***characterized in* that** the longitudinal axis (27a) of the said cylinder is substantially coincident with the said connecting axis (28).

7. Conditioning element according to claim 5 or 6 taken in combination with one of claims 2 to 4, ***characterized in* that** each end of the said cylinder extends as far as a respective finger (33) so that the said active part (26) and the said connecting part (27) substantially form a U.

8. Conditioning element according to any one of claims 1 to 7, ***characterized in* that** one end of the said third part (29) extends as far as the said connecting part (27).

9. Conditioning element according to any one of claims 1 to 8, ***characterized in* that** the material of which the said active part (26) is made differs from the material of which the said third part (29) is made.

10. Forage treatment device comprising a rotor (17) driven in rotation about a horizontal axis (17a), the said rotor (17) is made up of at least one conditioning element (23) according to any one of claims 1 to 9 connected, in a pivoting manner about a connecting axis (28) defining a first connection, to a support (24) by means of a connecting element (25), ***characterized in* that** the said conditioning element (23) comprises a bearing surface (34) intended to come into contact against a stop (35) provided on the said support (24) or on the said connecting element (25).

11. Forage treatment device according to claim 10, ***characterized in* that** when there is contact between the said bearing surface (34) and the said stop (35), the said active part (26) of the corresponding conditioning element (23) is oriented substantially radially.

12. Forage treatment device according to claim 10 or 11, ***characterized in* that** when there is contact between the said bearing surface (34) and the said stop (35), the center of gravity (G) of the said corresponding conditioning element (23) is distant from a straight line passing through the said connecting axis (28) and the said axis of rotation (17a).

13. Forage treatment device according to any one of claims 10 to 12, ***characterized in* that** a rear face (37) of the active part (26) of the said conditioning element (23) has a shape that substantially complements the exterior shape of the said support (24).

14. Forage treatment device according to any one of claims 10 to 13, ***characterized in* that**:
- the said support (24) is achieved by means of a tube (38), and
- the said bearing surface (34) and the said stop (35) are arranged inside the said tube (38), the said stop (35) being achieved via a face of the said connecting element (25).

15. Forage treatment device according to any one of claims 10 to 14, ***characterized in* that** a second connection is provided, which is intended to connect the said conditioning element (23) to the said support (24) in the event of breakage of the said first connection.

16. Forage treatment device according to claim 15, ***characterized in* that** the said conditioning element (23) comprises a second connecting part intended to connect the said conditioning element (23) to the said support (24) by means of the said second connection in the event of breakage of the said first connection.

17. Forage treatment device according to claim 16, ***characterized in* that** the said third part (29) constitutes the said second connecting part intended to connect the said conditioning element (23) to the said support (24) by means of the said second connection in the event of breakage of the said first connection.

18. Forage treatment device according to claim 17, ***characterized in* that** the said third part (29) comprises a body (51) and a head (52), the width (55) of the said head (52) being greater than the width (53) of the said body (51).

19. Forage treatment device according to claim 18, ***characterized in* that** the said body (51) is connected to the said first connecting part (27).

20. Forage treatment device according to any one of claims 10 to 19, ***characterized in* that** the surface of the said support (24) comprises at least one notch (50) allowing the at least partial insertion of the said third part (29) into the said support (34).

21. Forage treatment device according to claim 20 taken in combination with claim 18 or 19, ***characterized in* that** the said notch (50) comprises an entry zone (56) the width (57) of which is greater than or equal to the said width (55) of the said head (52).

22. Forage treatment device according to claim 20 or 21 taken in combination with claim 18 or 19, ***characterized in* that** the said notch (50) comprises a holding zone (58) the width (59) of which is less than the said width (55) of the said head (52) but greater than or equal to the said width (53) of the said body (51).

23. Forage treatment device according to claims 21 and 22, ***characterized in* that**, viewed in a direction of rotation (18) of the said rotor (17), the said entry zone (56) is arranged ahead of the said holding zone (58).

24. Forage treatment device according to any one of claims 20 to 23, ***characterized in* that** the said notch (50) extends in a plane at least substantially perpendicular to the said axis of rotation (17a) of the said rotor (17).

25. Forage treatment device according to any one of claims 10 to 24, ***characterized in* that** the said connecting element (25) is connected removably to the said support (24).

26. Agricultural mower, ***characterized in* that** it comprises a forage treatment device (14) according to any one of claims 10 to 25.

## Patentansprüche

1. Konditionierungselement für eine Vorrichtung zur Behandlung von Futter mit
- einem aktiven Teil (26), der dazu bestimmt ist, das Futter zu bearbeiten, und
- einem ersten Verbindungsteil (27), der dazu bestimmt ist, das Konditionierungselement (23) um eine Verbindungsachse (28) schwenkbar mit einem Träger (24) zu verbinden,
***dadurch gekennzeichnet,* dass** das Konditionierungselement (23) zusätzlich einen dritten Teil (29) umfasst, der derart angeordnet ist, dass:
- der Schwerpunkt (G1) des aktiven Teils (26) und der Schwerpunkt (G2) des dritten Teils (29) beiderseits einer Ebene (30) angeordnet sind, die durch die Verbindungsachse (28) und im Wesentlichen senkrecht zu einer Längsachse (31) des Konditionierungselements (23) verläuft, und
- der Schwerpunkt (G2) des dritten Teils (29) von einer Ebene (32) entfernt ist, die durch die Verbindungsachse (28) verläuft und den Schwerpunkt (G1) des aktiven Teils (26) enthält.

2. Konditionierungselement nach Anspruch 1, ***dadurch gekennzeichnet,* dass** der aktive Teil (26) zwei Finger (33) umfasst, die zueinander in eine im Wesentlichen zur Verbindungsachse (28) parallele Richtung versetzt sind.

3. Konditionierungselement nach Anspruch 2, ***dadurch gekennzeichnet,* dass** die Finger (33) im Wesentlichen zueinander parallel und in Bezug auf die Verbindungsachse (28) senkrecht sind.

4. Konditionierungselement nach Anspruch 2 oder 3, ***dadurch gekennzeichnet,* dass** die Finger (33) im Wesentlichen gekrümmt sind.

5. Konditionierungselement nach irgend einem der Ansprüche 1 bis 4, ***dadurch gekennzeichnet,* dass** der Verbindungsteil (27) zumindest im Wesentlichen die Form eines Zylinders hat.

6. Konditionierungselement nach Anspruch 5, ***dadurch gekennzeichnet,* dass** die Längsachse (27a) des Zylinders im Wesentlichen mit der Verbindungsachse (28) zusammenfällt.

7. Konditionierungselement nach Anspruch 5 oder 6 in Kombination mit einem der Ansprüche 2 bis 4, ***dadurch gekennzeichnet,* dass** sich jedes Ende des Zylinders bis zu einem jeweiligen Finger (33) verlängert, so dass der aktive Teil (26) und der Verbindungsteil (27) im Wesentlichen ein "U" bilden.

8. Konditionierungselement nach irgend einem der Ansprüche 1 bis 7, ***dadurch gekennzeichnet,* dass** sich ein Ende des dritten Teils (29) bis zum Verbindungsteil (27) verlängert.

9. Konditionierungselement nach irgend einem der Ansprüche 1 bis 8, ***dadurch gekennzeichnet,* dass** das Material, aus dem der aktive Teil (26) besteht, sich von dem Material, aus welchem der dritte Teil (29) besteht, unterscheidet.

10. Vorrichtung zur Behandlung von Futter mit einem Rotor (17), der in Drehung um eine Horizontalachse (17a) angetrieben wird, wobei der Rotor (17) aus mindestens einem Konditionierungselement (23) nach irgend einem der Ansprüche 1 bis 9 besteht, das schwenkbar um eine Verbindungsachse (28), die eine erste Verbindung definiert, mit einem Träger (24) mittels eines Verbindungselements (25) verbunden ist, ***dadurch gekennzeichnet,* dass** das Konditionierungselement (23) eine Stützfläche (34) umfasst, die dazu bestimmt ist, mit einem Anschlag (35) in Kontakt zu kommen, der auf dem Träger (24) oder dem Verbindungselement (25) vorgesehen ist.

11. Vorrichtung zur Behandlung von Futter nach Anspruch 10, ***dadurch gekennzeichnet,* dass** beim Kontakt der Stützfläche (34) am Anschlag (35) der aktive Teil (26) des entsprechenden Konditionierungselements (23) im Wesentlichen radial ausgerichtet ist.

12. Vorrichtung zur Behandlung von Futter nach Anspruch 10 oder 11, ***dadurch gekennzeichnet,* dass** beim Kontakt der Stützfläche (34) am Anschlag (35) der Schwerpunkt (G) des entsprechenden Konditionierungselements (23) von einer Gerade, die durch die Verbindungsachse (28) und die Drehachse (17a) geht, entfernt ist.

13. Vorrichtung zur Behandlung von Futter nach irgend einem der Ansprüche 10 bis 12, ***dadurch gekennzeichnet,* dass** eine Rückseite (37) des aktiven Teils (26) des Konditionierungselements (23) eine im Wesentlichen zur äußeren Form des Trägers (24) komplementäre Form hat.

14. Vorrichtung zur Behandlung von Futter nach irgend einem der Ansprüche 10 bis 13, ***dadurch gekennzeichnet,* dass**:
- der Träger (24) mittels eines Rohrs (38) ausgeführt ist, und
- die Stützfläche (34) und der Anschlag (35) im Inneren des Rohrs (38) angeordnet sind, wobei der Anschlag (35) durch eine Seite des Verbindungselements (25) verwirklicht ist.

15. Vorrichtung zur Behandlung von Futter nach irgend einem der Ansprüche 10 bis 14, ***dadurch gekennzeichnet,* dass** eine zweite Verbindung vorgesehen ist, die dazu bestimmt ist, das Konditionierungselement (23) mit dem Träger (24) im Falle des Bruchs der ersten Verbindung zu verbinden.

16. Vorrichtung zur Behandlung von Futter nach Anspruch 15, ***dadurch gekennzeichnet,* dass** das Konditionierungselement (23) einen zweiten Verbindungsteil umfasst, der dazu bestimmt ist, das Konditionierungselement (23) mit dem Träger (24) mittels der zweiten Verbindung im Falle eines Bruchs der ersten Verbindung zu verbinden.

17. Vorrichtung zur Behandlung von Futter nach Anspruch 16, ***dadurch gekennzeichnet,* dass** der dritte Teil (29) den zweiten Verbindungsteil darstellt, der dazu bestimmt ist, das Konditionierungselement (23) mit dem Träger (24) mittels der zweiten Verbindung im Falle eines Bruchs der ersten Verbindung zu verbinden.

18. Vorrichtung zur Behandlung von Futter nach Anspruch 17, ***dadurch gekennzeichnet,* dass** der dritte Teil (29) einen Körper (51) und einen Kopf (52) umfasst, wobei die Breite (55) des Kopfes (52) größer als die Breite (53) des Körpers (51) ist.

19. Vorrichtung zur Behandlung von Futter nach Anspruch 18, ***dadurch gekennzeichnet,* dass** der Körper (51) mit dem ersten Verbindungsteil (27) verbunden ist.

20. Vorrichtung zur Behandlung von Futter nach irgend einem der Ansprüche 10 bis 19, ***dadurch gekennzeichnet,* dass** die Fläche des Trägers (24) mindestens eine Kerbe (50) umfasst, die die zumindest teilweise Einführung des dritten Teils (29) in den Träger (34) gestattet.

21. Vorrichtung zur Behandlung von Futter nach Anspruch 20 in Kombination mit Anspruch 18 oder 19, ***dadurch gekennzeichnet,* dass** die Kerbe (50) eine Eingangszone (56) umfasst, deren Breite (57) größer oder gleich der Breite (55) des Kopfes (52) ist.

22. Vorrichtung zur Behandlung von Futter nach Anspruch 20 oder 21 in Kombination mit Anspruch 18 oder 19, ***dadurch gekennzeichnet,* dass** die Kerbe (50) eine Haltezone (58) umfasst, deren Breite (59) geringer als die Breite (55) des Kopfes (52) aber größer oder gleich der Breite (53) des Körpers (51) ist.

23. Vorrichtung zur Behandlung von Futter nach den Ansprüchen 21 und 22, ***dadurch gekennzeichnet,* dass** in Drehrichtung (18) des Rotors (17) gesehen die Eingangszone (56) vor der Haltezone (58) angeordnet ist.

24. Vorrichtung zur Behandlung von Futter nach irgend einem der Ansprüche 20 bis 23, ***dadurch gekennzeichnet,* dass** sich die Kerbe (50) entlang einer zumindest im Wesentlichen auf die Drehachse (17a) des Rotors (17) senkrechten Ebene erstreckt.

25. Vorrichtung zur Behandlung von Futter nach irgend einem der Ansprüche 10 bis 24, ***dadurch gekennzeichnet,* dass** das Verbindungselement (25) abnehmbar mit dem Träger (24) verbunden ist.

26. Landwirtschaftliche Mähmaschine, ***dadurch gekennzeichnet,* dass** sie eine Vorrichtung zur Behandlung von Futter (14) nach irgend einem der Ansprüche 10 bis 25 umfasst.
